# FASCICULE DE BREVET EUROPEEN

(11) **EP 3 893 081 B1**
(45) Date de publication et mention de la délivrance du brevet: **23.08.2023**
(21) Numéro de dépôt: 21164803.5
(22) Date de dépôt: 25.03.2021
(51) Int. Cl.: G06F 1/12, G06F 1/14, G05D 1/00, G06F 9/38, G06F 11/16

(54) **PROCÉDÉ ET SYSTÈME DE SYNCHRONISATION D'UNITÉS DE CALCUL D'UN AÉRONEF**
VERFAHREN UND SYSTEM ZUR SYNCHRONISIERUNG DER RECHNEREINHEITEN EINES LUFTFAHRZEUGS
METHOD AND SYSTEM FOR SYNCHRONISING THE COMPUTING UNITS OF AN AIRCRAFT

(30) Priorité: 07.04.2020 FR 2003473
(43) Date de publication de la demande: 13.10.2021
(73) Titulaire: AIRBUS OPERATIONS (S.A.S.), 31060 Toulouse (FR)
(72) Inventeur: VLACICH, Christophe, 31060 Toulouse Cedex 9 (FR); DESHAYES, Bertrand, 31060 Toulouse Cedex 9 (FR); LAFON, Laurent, 31060 Toulouse Cedex 9 (FR); VIADER, Frédéric, 31060 Toulouse Cedex 9 (FR)
(74) Mandataire: Jardel, Marc Henry Philippe

(56) Documents cités:
- EP-A2- 1 283 468
- US-A1- 2002 152 418
- US-A1- 2008 196 037

## Description

### Domaine technique

La présente invention concerne un procédé et un système de synchronisation d'unités de calcul d'un aéronef, en particulier d'un avion de transport, lesdites unités de calcul étant regroupées dans un ensemble d'unités de calcul.

### Etat de la technique

Dans le cadre de la présente invention, les unités de calcul :
- peuvent correspondre chacune à un calculateur, l'ensemble d'unités de calcul représentant alors un ensemble de calculateurs, comprenant par exemple un calculateur maître et un calculateur esclave ; ou
- peuvent correspondre à différentes voies ou différents modules d'un unique calculateur, l'ensemble (d'unités de calcul) représentant alors le calculateur et les unités de calcul correspondant à ces voies ou modules.

De plus, dans le cadre de la présente invention, les unités de calcul de l'ensemble d'unités de calcul mettent en oeuvre, au moins en partie, les mêmes types de partitions. Chaque partition met en oeuvre au moins une fonction (logicielle), par exemple pour commander des actionneurs d'une gouverne dans le cas d'un calculateur de commande de vol.

On sait qu'un aéronef, en particulier un avion de transport, comporte en général plusieurs ensembles d'unités de calcul, et en particulier un ensemble de calculateurs de commande de vol qui calculent des ordres de contrôle d'actionneurs de gouvernes de l'aéronef. Généralement, une partie des calculateurs sont utilisés en mode commande (COM) et les autres calculateurs sont utilisés en mode moniteur (MON), un calculateur en mode moniteur surveillant le fonctionnement d'un calculateur en mode commande. Les calculateurs sont ainsi répartis selon des couples COM/MON.

En outre, certains des calculateurs de l'aéronef peuvent être de type duplex, c'est-à-dire qu'ils comprennent deux modules formant par exemple une voie A et une voie B. Chaque fonction mise en oeuvre par le calculateur est dupliquée sur chacune des voies A et B, l'une des voies agissant en mode commande (COM) et l'autre en mode moniteur (MON). Cela permet de réaliser une surveillance de type COM/MON au cours de laquelle, pour chaque fonction mise en oeuvre par le calculateur, la voie agissant en mode moniteur surveille la voie agissant en mode commande de façon à détecter une éventuelle défaillance du couple de voies.

Quelle que soit l'architecture considérée, il est nécessaire que les unités de calcul d'un tel ensemble d'unités de calcul puissent être synchronisées de façon précise et fiable, tout en prévoyant des moyens de sécurité.

Il existe donc un besoin pour une telle synchronisation.

Le document US 2008/196037 A1 décrit un procédé de synchronisation selon l'art antérieur.

### Exposé de l'invention

La présente invention a pour objet de répondre à ce besoin. Elle concerne un ensemble selon la revendication 1

Ainsi, le système de synchronisation est en mesure de synchroniser de façon fiable et précise les unités de calcul (notamment à l'aide d'une horloge qui est indépendante des horloges internes des unités de calcul).

De plus, grâce à l'élément de contrôle, la synchronisation est uniquement prise en compte en cas de conformité de l'impulsion de synchronisation, ce qui apporte une contribution à la sûreté de fonctionnement des unités de calcul. En effet, avantageusement, le système de synchronisation est configuré pour arrêter la prise en compte des traitements d'une desdites unités de calcul lorsque l'élément de contrôle de cette unité de calcul conclut à une absence de conformité.

En outre, de façon avantageuse, l'unité de génération est configurée pour générer la première impulsion de synchronisation après réception d'une information de disponibilité de chacune desdites unités de calcul.

Par ailleurs, dans un mode de réalisation particulier, le système de synchronisation comporte un générateur de retard agencé entre l'unité de génération et lesdites unités de calcul et configuré pour ajouter des délais à l'impulsion de synchronisation, les délais étant différents en fonction des unités de calcul destinataires de l'impulsion de synchronisation, chacune desdites unités de calcul prenant en compte l'impulsion de synchronisation avec le délai correspondant, telle que reçue du générateur de retard.

En outre, dans un mode de réalisation particulier, le système de synchronisation comporte des éléments de synchronisation directe configurés pour réaliser une synchronisation entre les unités de calcul afin de synchroniser une ou plusieurs partitions à l'intérieur de la séquence de partitions.

La présente invention concerne également un procédé de synchronisation d'au moins deux unités de calcul d'un aéronef, ces deux unités de calcul étant aptes à mettre en oeuvre une pluralité de mêmes partitions, chacune desdites unités de calcul comportant au moins un ordonnanceur, une horloge interne et une plateforme logicielle comprenant ladite pluralité de partitions.

Selon l'invention, ledit procédé de synchronisation comprend au moins la suite d'étapes selon la revendication 6.

Avantageusement, le procédé de synchronisation comprend une étape d'arrêt consistant à arrêter la prise en compte des traitements d'une desdites unités de calcul lorsque l'étape de contrôle relative à cette unité de calcul conclut à une absence de conformité.

En outre, de façon avantageuse, l'étape de génération génère la première impulsion de synchronisation après réception d'une information de disponibilité de chacune desdites unités de calcul.

Par ailleurs, dans un mode de réalisation particulier, le procédé de synchronisation comprend une étape de génération de retard, mise en oeuvre par un générateur de retard, consistant à ajouter des délais à l'impulsion de synchronisation, les délais étant différents en fonction des unités de calcul destinataires de l'impulsion de synchronisation, l'étape de contrôle et l'étape de déclenchement prenant en compte à chaque fois l'impulsion de synchronisation avec le délai correspondant, telle que reçue par l'unité de calcul correspondante.

En outre, dans un mode de réalisation particulier, le procédé de synchronisation comprend au moins une étape de synchronisation directe consistant à réaliser une synchronisation entre les unités de calcul afin de synchroniser une ou plusieurs partitions à l'intérieur de la séquence de partitions.

La présente invention concerne en outre ;
- un ensemble d'unités de calcul comportant au moins deux unités de calcul et un système de synchronisation tel que celui décrit ci-dessus, chacune desdites unités de calcul comprenant au moins un ordonnanceur, une horloge interne et une plateforme logicielle ; et/ou
- un aéronef, en particulier un avion de transport, comprenant un tel ensemble d'unités de calcul.

### Brève description des figures

Les figures annexées feront bien comprendre comment l'invention peut être réalisée. Sur ces figures, des références identiques désignent des éléments semblables.
La figure 1 est une vue schématique, en perspective, d'un aéronef équipé d'un ensemble d'unités de calcul, pourvu d'un système de synchronisation.
La figure 2 est le schéma synoptique d'un exemple d'un ensemble de deux unités de calcul.
La figure 3 est le schéma synoptique d'un mode réalisation particulier d'une unité de calcul de type maître, pourvue d'un système de synchronisation.
La figure 4 est le schéma synoptique d'un mode réalisation particulier d'une unité de calcul de type esclave, faisant partie du même ensemble d'unités de calcul que l'unité de calcul maître de la figure 3.
La figure 5 illustre schématiquement les étapes principales d'un procédé de synchronisation.

### Description détaillée

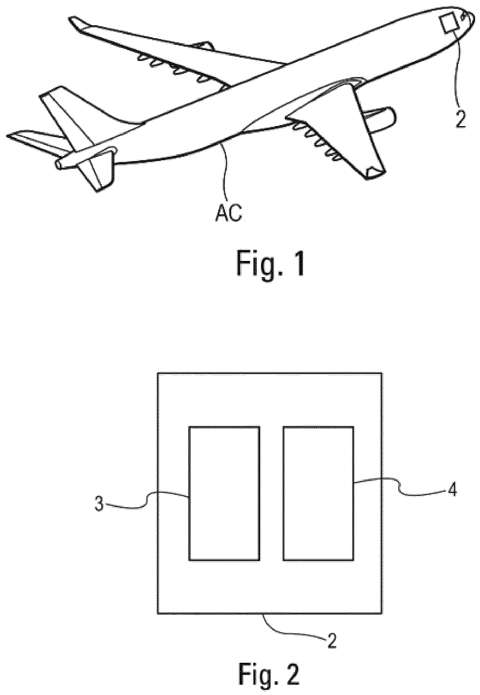

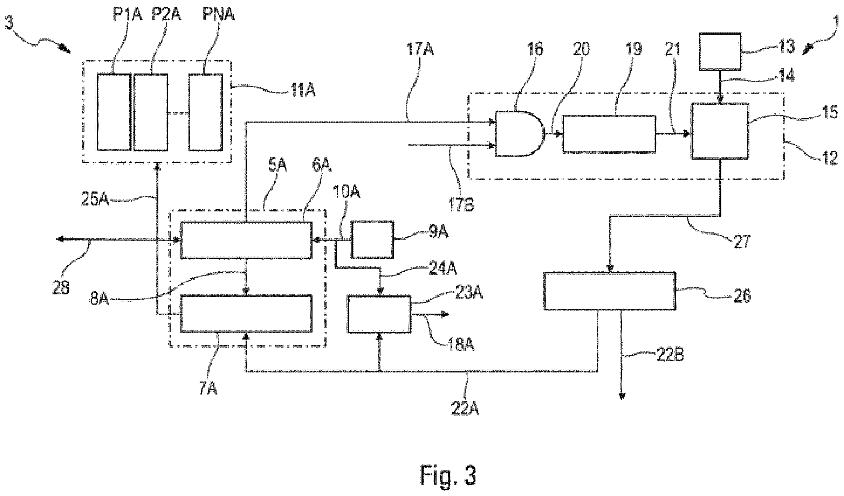

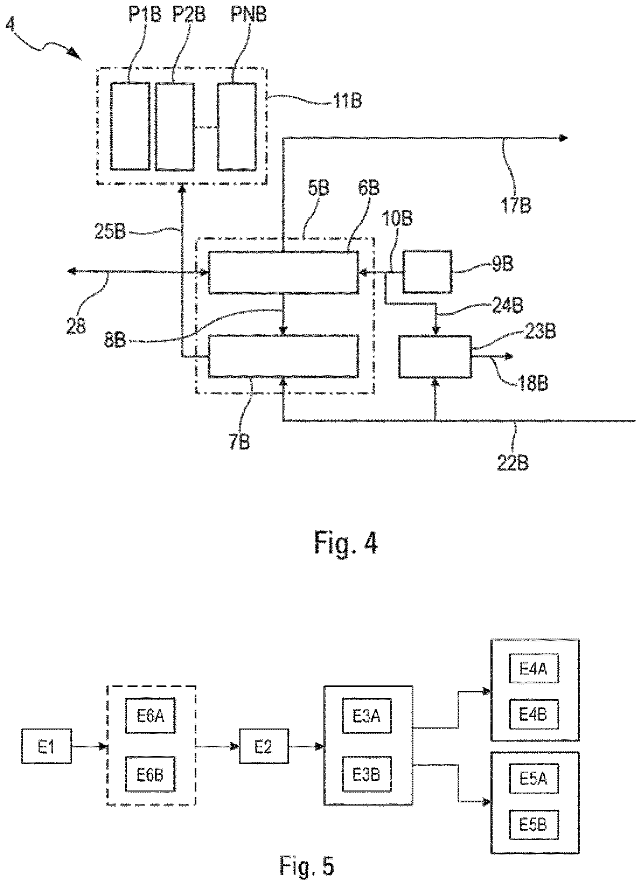

Le système de synchronisation 1, illustrant l'invention et tel que décrit ci-dessous en référence aux figures 3 et 4, fait partie d'un ensemble 2 d'unités de calcul d'un aéronef AC, en particulier d'un avion de transport comme représenté à titre d'exemple sur la figure 1.

L'ensemble 2 est représenté sur la figure 2, dans un mode de réalisation particulier, avec deux unités de calcul 3 et 4, sous forme d'une plateforme duale. La description suivante est relative à un tel exemple à deux unités de calcul 3 et 4, bien que dans le cadre de la présente invention, l'ensemble 2 puisse comporter plus de deux unités de calcul, par exemple trois, quatre,..., unités de calcul.

Dans l'exemple représenté sur les figures 2 à 4, l'unité de calcul 3 est considérée comme une unité maître et l'unité de calcul 4 est considérée comme une unité esclave.

Dans le cadre de l'invention, les unités de calcul peuvent correspondre chacune :
- à un calculateur, l'ensemble d'unités de calcul représentant alors un ensemble de calculateurs ; ou
- à une voie ou à un module d'un seul et même calculateur, l'ensemble (d'unités de calcul) représentant alors le calculateur et les unités de calcul correspondant à ces voies ou modules.

L'unité de calcul 3 comporte notamment, comme représenté sur la figure 3 :
- une plateforme 5A comprenant un système d'exploitation 6A destiné notamment à gérer l'exécution de programmes et un ordonnanceur 7A relié par une liaison 8A au système d'exploitation 6A, l'ordonnanceur 7A (« scheduler » en anglais) permettant notamment d'établir et de commander une séquence de mise en oeuvre de partitions ;
- une horloge interne 9A reliée par une liaison 10A au système d'exploitation 6A ; et
- une plateforme logicielle 11A.

La plateforme logicielle 11A comporte des partitions P1A, P2A, ..., PNA, N étant un entier supérieur à 1.

En outre, l'unité de calcul 4 comporte notamment, comme représenté sur la figure 4 :
- une plateforme 5B comprenant un système d'exploitation 6B destiné notamment à gérer l'exécution de programmes et un ordonnanceur 7B relié par une liaison 8B au système d'exploitation 6B, l'ordonnanceur 7B permettant notamment d'établir et de commander une séquence de mise en oeuvre de partitions ;
- une horloge interne 9B reliée par une liaison 10B au système d'exploitation 6B ; et
- une plateforme logicielle 11B.

La plateforme logicielle 11B comporte des partitions P1B, P2B, ..., PNB, N étant un entier supérieur à 1.

Les partitions P1B à PNB de la plateforme logicielle 11B sont, respectivement, identiques aux partitions P1A à PNA de la plateforme logicielle 11A.

Ces partitions P1A à PNA et P1B à PNB réalisent des traitements relatifs à des fonctions usuelles que doit mettre en oeuvre l'ensemble 2 d'unités de calcul 3 et 4 sur l'aéronef AC, telles que la génération d'ordres de commande de gouvernes de l'aéronef AC par exemple.

Par ailleurs, le système de synchronisation 1 comporte, comme représenté sur la figure 3, une unité de génération 12 configurée pour générer une impulsion de synchronisation qui est une impulsion en tension. L'unité de génération 12 est associée à une horloge 13 à laquelle elle est reliée par une liaison 14. L'horloge 13 est indépendante des horloges 9A et 9B internes des unités de calcul 3 et 4.

L'unité de génération 12 comprend un générateur de forme 15 pour générer une impulsion de synchronisation calibrée, à partir de données de ladite horloge 13.

L'unité de génération 12 comprend également :
- un élément de réception 16 lié par des liaisons 17A et 17B aux plateformes 5A et 5B des unités de calcul 3 et 4 et configuré pour recevoir une information de disponibilité de chacune des unités de calcul 3 et 4. Cette information de disponibilité indique que l'unité de calcul correspondante est prête à recevoir une impulsion de synchronisation ; et
- un générateur d'impulsion 19 relié respectivement par des liaisons 20 et 21 à l'élément de réception 16 et au générateur de forme 15. Le générateur d'impulsion 19 génère une impulsion qui est mise en forme (ou calibrée) par le générateur de forme 15, avant d'être transmise comme précisé ci-dessous. Le générateur de forme 15 génère une impulsion de synchronisation présentant une forme électrique et temporelle donnée, pour corriger la dérive temporelle d'exécution des partitions des unités de calcul 3 et 4 qui sont asynchrones. Cette impulsion de synchronisation est émise par l'unité de génération 12.

Le générateur d'impulsion 19 génère une impulsion lorsqu'il a reçu une information de disponibilité de toutes les unités de calcul 3 et 4. Dans un mode de réalisation particulier, le générateur d'impulsion 19 prévoit un délai supplémentaire pour garantir la bonne réception de toutes les informations de disponibilité.

L'unité de génération 12 est configurée pour générer :
- la première impulsion de synchronisation après réception d'une information de disponibilité de chacune des unités de calcul 3 et 4 ; et
- les impulsions de synchronisation suivantes (autres que ladite première impulsion de synchronisation), de façon périodique, c'est-à-dire à des intervalles de temps identiques, par exemple toutes les 5 millisecondes.

Le système de synchronisation 1 comporte de plus :
- des liaisons de transmission 22A et 22B configurées pour transmettre (de façon périodique) une impulsion de synchronisation à chacune desdites unités de calcul 3 et 4 ; et
- dans chacune desdites unités de calcul 3 et 4, un élément de contrôle 23A, 23B.

L'élément de contrôle 23A de l'unité de calcul 3 compare l'impulsion de synchronisation, générée par l'unité de génération 12 et reçue par l'intermédiaire de la liaison de transmission 22A, à une impulsion générée par l'horloge interne 9A de l'unité de calcul 3. A partir cette comparaison, l'élément de contrôle 23A conclut à une conformité ou à une absence de conformité comme précisé ci-dessous.

De même, l'élément de contrôle 23B de l'unité de calcul 4 compare l'impulsion de synchronisation, générée par l'unité de génération 12 et reçue par l'intermédiaire de la liaison de transmission 22B, à une impulsion générée par l'horloge interne 9B de l'unité de calcul 4. A partir cette comparaison, l'élément de contrôle 23AB conclut à une conformité ou à une absence de conformité.

Dans le cadre de la présente invention, on considère :
- qu'il y a conformité, si l'impulsion de synchronisation et l'impulsion générée par l'horloge interne sont de même forme (temporelle) ; et
- qu'il y a absence de conformité, si l'impulsion de synchronisation et l'impulsion générée par l'horloge interne sont de formes (temporelles) différentes.

De plus, l'ordonnanceur 7A de l'unité de calcul 3 est configuré pour déclencher une séquence de mise en oeuvre d'au moins certaines des partitions P1A à PNA, via une liaison 25A, à la réception de l'impulsion de synchronisation, et ceci uniquement lorsque l'élément de contrôle 23A de l'unité de calcul 3 conclut à une conformité.

De même, l'ordonnanceur 7B de l'unité de calcul 4 est configuré pour déclencher une séquence de mise en oeuvre d'au moins certaines des partitions P1B à PNB, via une liaison 25B, à la réception de l'impulsion de synchronisation, et ceci uniquement lorsque l'élément de contrôle 23B de l'unité de calcul 4 conclut à une conformité.

Par conséquent, chaque ordonnanceur 7A, 7B déclenche la séquence de mise en oeuvre des partitions dès la réception de l'impulsion de synchronisation. Quand la séquence est réalisée, l'ordonnanceur 7A, 7B se met en attente de la réception de l'impulsion de synchronisation suivante pour déclencher de nouveau une séquence de mise en oeuvre de partitions.

En outre, le système de synchronisation 1 est configuré :
- pour arrêter la prise en compte des traitements de l'unité de calcul 3 lorsque l'élément de contrôle 23A de cette unité de calcul 3 conclut à une absence de conformité. Cette information peut être transmise par l'intermédiaire d'une liaison 18A à un système dédié (non représenté) ; et
- pour arrêter la prise en compte des traitements de l'unité de calcul 4 et lorsque l'élément de contrôle 23B de cette unité de calcul 4 conclut à une absence de conformité. Cette information peut être transmise par l'intermédiaire d'une liaison 18B à un système dédié (non représenté).

L'arrêt de la prise en compte des traitements d'une unité de calcul peut être réalisé de différentes manières, par exemple en arrêtant le fonctionnement de l'unité de calcul ou en ne prenant pas en compte les informations qu'elle génère. Cet arrêt apporte une contribution importante à la sûreté de l'ensemble 2 d'unités de calcul, en particulier lorsqu'il s'agit d'unités de calcul (ou calculateurs) ayant un impact sur la sécurité de vol de l'aéronef AC, tel qu'un calculateur de commande de vol par exemple.

Le système de synchronisation 1, tel que décrit ci-dessus, est donc en mesure de réaliser une synchronisation fiable et efficace des unités de calcul 3 et 4 de l'ensemble 2 (notamment grâce à l'horloge 13 qui est indépendante des horloges internes 9A et 9B des unités de calcul 3 et 4). De plus, grâce notamment à l'élément de contrôle 23A, 23B, la synchronisation est uniquement prise en compte en cas de conformité de l'impulsion de synchronisation, ce qui contribue à augmenter la sûreté de fonctionnement de l'ensemble 2 (duquel fait partie le système de synchronisation 1).

Dans le mode de réalisation particulier représenté sur les figures 3 et 4, le système de synchronisation 1 est agencé à proximité de l'unité de calcul 3. Il est également envisageable de l'intégrer dans l'unité de calcul 3, ou bien de l'agencer à proximité ou dans de l'unité de calcul 4. En outre, dans un mode de réalisation particulier, le système de synchronisation 1 peut être logé dans un module dédié, différent desdites unités de calcul 3 et 4.

Par ailleurs, dans un mode de réalisation particulier, le système de synchronisation 1 comporte un générateur de retard 26 agencé entre l'unité de génération 12 et les unités de calcul 3 et 4. Ce générateur de retard 26 est configuré pour ajouter des délais à l'impulsion de synchronisation, reçue via une liaison 27 de l'unité de génération 12. Les délais ajoutés sont différents en fonction des unités de calcul 3 et 4 destinataires de l'impulsion de synchronisation. Chacune des unités de calcul 3 et 4 prend en compte l'impulsion de synchronisation avec le délai correspondant, telle que reçue du générateur de retard 26, par l'intermédiaire de la liaison 22A, 22B. Ceci permet de désynchroniser les unités de calcul 3 et 4, tout en permettant de déclencher les séquences de partitions à la même périodicité. Cette caractéristique permet, notamment, d'éviter qu'un évènement (notamment extérieur) susceptible de perturber les unités de calcul 3 et 4 intervienne exactement au même instant lors de la mise en oeuvre de la même partition et génère un traitement erroné de cette partition sur toutes les unités de calcul 3 et 4 de l'ensemble 2. Cette caractéristique (générant un décalage temporel) apporte ainsi une aide supplémentaire à la sûreté de l'ensemble 2.

De préférence, ce dernier mode de réalisation particulier (qui consomme des ressources de calcul) est uniquement implémenté si les conditions de sûreté de fonctionnement exigent une telle protection supplémentaire.

En outre, dans un mode de réalisation particulier, le système de synchronisation 1 comporte des éléments de synchronisation directe (non représentés). Ces éléments de synchronisation directe sont configurés pour réaliser une synchronisation directe entre les unités de calcul 3 et 4 de l'ensemble 2, via une liaison 28 liant ensemble les systèmes d'exploitation 6A et 6B des unités de calcul 3 et 4. Ces éléments de synchronisation directe ont pour but de synchroniser le déclenchement à un instant donné d'une ou plusieurs partitions à l'intérieur de la séquence de partitions, la séquence de partitions étant quant à elle déclenchée à chaque nouvelle impulsion de synchronisation. Cette synchronisation directe (de partitions) est donc réalisée à des intervalles de temps faibles à l'intérieur de la période de génération de l'impulsion de synchronisation.

Le système de synchronisation 1 de l'ensemble 2 d'unités de calcul 3 et 4, tel que décrit ci-dessus, est apte à mettre en oeuvre un procédé de synchronisation représenté sur la figure 5

Ce procédé de synchronisation comprend au moins la suite d'étapes suivantes, ladite suite d'étapes étant mise en oeuvre de façon répétitive :
- une étape de génération E1, mise en oeuvre par l'unité de génération 12, consistant à générer une impulsion de synchronisation. L'impulsion de synchronisation est générée à partir de données de l'horloge 13 associée à l'unité de génération 12. L'étape de génération E1 génère la première impulsion de synchronisation après réception d'une information de disponibilité de chacune des unités de calcul 3 et 4, et les impulsions de synchronisation suivantes de façon périodique ;
- une étape de transmission E2, mise en oeuvre par les liaisons de transmission 22A et 22B, consistant à transmettre l'impulsion de synchronisation à chacune des unités de calcul 3 et 4 ;
- des étapes de contrôle E3A et E3B, à savoir une étape de contrôle E3A, E3B pour chacune des unités de calcul 3 et 4. Chacune des étapes de contrôle E3A et E3B qui est mise en oeuvre par l'unité de contrôle 23A, 23B, consiste à comparer l'impulsion de synchronisation reçue par l'unité de calcul 3, 4 à une impulsion générée par l'horloge interne 9A, 9B de l'unité de calcul 3, 4, et à en conclure à une conformité ou à une absence de conformité en fonction de cette comparaison ; et :
   - une ou des étapes de déclenchement E4A et E4B, à savoir une étape de déclenchement pour chacune des unités de calcul 3 et 4. Chacune des étapes de déclenchement E4A et E4B qui est mise par l'ordonnanceur 7A, 7B de l'unité de calcul 34, consiste à déclencher une séquence de mise en oeuvre d'au moins certaines des partitions PA1 à PNA, PB1 à PNB à la réception de l'impulsion de synchronisation, lorsque l'étape de contrôle E3A, E3B correspondante conclut à une conformité ; ou
   - une ou des étapes d'arrêt E5A, E5B consistant à arrêter la prise en compte des traitements d'une des unités de calcul 3 et 4, lorsque l'étape de contrôle E3A, E3B relative à cette unité de calcul 3, 4 conclut à une absence de conformité.

Par ailleurs, dans un mode de réalisation particulier, le procédé de synchronisation comprend une étape de génération de retard E6A, E6B, mise en oeuvre (par le générateur de retard 26) entre l'étape génération E1 et l'étape de transmission E2. Comme cette étape de génération de retard E6A, E6 est optionnelle, elle est représentée en tirets sur la figure 5. Cette étape de génération de retard E6A, E6B consiste à ajouter des délais à l'impulsion de synchronisation. Les délais sont différents en fonction des unités de calcul 3 et 4 destinataires de l'impulsion de synchronisation, L'étape de contrôle E3A, E3B et l'étape de déclenchement E4A, E4B prennent en compte à chaque fois l'impulsion de synchronisation avec un délai correspondant, telle que reçue par l'unité de calcul 3, 4 correspondante.

En outre, dans un mode de réalisation particulier, le procédé de synchronisation comprend au moins une étape de synchronisation directe (non représentée) consistant à réaliser une synchronisation entre les unités de calcul 3 et 4 afin de synchroniser une ou plusieurs partitions à l'intérieur de la séquence de partitions.

## Revendications

1. Ensemble comportant un système de synchronisation d'au moins deux unités de calcul d'un aéronef, ainsi que lesdites au moins deux unités de calcul, ces deux unités de calcul (3, 4) étant aptes à mettre en oeuvre une pluralité de mêmes partitions (P1A à PNA, P1B à PNB), chacune desdites unités de calcul (3, 4) comportant au moins un ordonnanceur (7A, 7B), une horloge interne (9A, 9B) et une plateforme logicielle (11A, 11B) comprenant ladite pluralité de partitions (P1A à PNA, P1B à PNB),
le système de synchronisation comportant:
- une horloge (13) indépendante;
- une unité de génération (12) configurée pour générer une impulsion de synchronisation, ladite unité de génération (12) étant associée à l'horloge (13) indépendante et comprenant un générateur d'impulsion (19) et un générateur de forme (15) pour générer une impulsion de synchronisation calibrée à partir de données de ladite horloge (13), ladite impulsion de synchronisation étant générée de façon périodique, et un élément de réception (16) configuré pour recevoir une information de disponibilité de chacune desdites unités de calcul (3, 4),;
- des liaisons de transmission (22A, 22B) configurées pour transmettre l'impulsion de synchronisation à chacune desdites unités de calcul (3, 4) ; et
- dans chacune desdites unités de calcul (3, 4), un élément de contrôle (23A, 23B) configuré pour comparer l'impulsion de synchronisation reçue par l'unité de calcul (3, 4) à une impulsion générée par l'horloge interne (9A, 9B) de cette unité de calcul (3, 4), et pour en conclure à une conformité si l'impulsion de synchronisation et l'impulsion générée par l'horloge interne (9A, 9B) sont de même forme temporelle et à une absence de conformité si l'impulsion de synchronisation et l'impulsion générée par l'horloge interne (9A, 9B) sont de formes temporelles différentes en fonction de cette comparaison,
et en ce que l'ordonnanceur (7A, 7B) de chacune desdites unités de calcul (3, 4) est configuré pour déclencher une séquence de mise en oeuvre d'au moins certaines desdites partitions (P1A à PNA, P1B à PNB) à la réception de l'impulsion de synchronisation, et ceci uniquement lorsque l'élément de contrôle (23A, 23B) de l'unité de calcul (3, 4) correspondante conclut à une conformité.

2. Ensemble selon la revendication 1,
**caractérisé en ce qu'**il est configuré pour arrêter la prise en compte des traitements d'une desdites unités de calcul (3, 4) lorsque l'élément de contrôle (23A, 23B) de cette unité de calcul (3, 4) conclut à une absence de conformité.

3. Ensemble selon l'une des revendications 1 et 2,
**caractérisé en ce que** l'unité de génération (12) est configurée pour générer la première impulsion de synchronisation après réception d'une information de disponibilité de chacune desdites unités de calcul (3, 4).

4. Ensemble selon l'une quelconque des revendications 1 à 3,
**caractérisé en ce qu'**il comporte un générateur de retard (26) agencé entre l'unité de génération (12) et lesdites unités de calcul (3, 4) et configuré pour ajouter des délais à l'impulsion de synchronisation, les délais étant différents en fonction des unités de calcul (3, 4) destinataires de l'impulsion de synchronisation, chacune desdites unités de calcul (3, 4) prenant en compte l'impulsion de synchronisation avec le délai correspondant, telle que reçue du générateur de retard (26).

5. Ensemble selon l'une quelconque des revendications 1 à 4,
**caractérisé en ce qu'**il comporte des éléments de synchronisation directe configurés pour réaliser une synchronisation entre les unités de calcul (3, 4) afin de synchroniser une ou plusieurs partitions à l'intérieur de la séquence de partitions.

6. Procédé de synchronisation d'au moins deux unités de calcul d'un aéronef, ces deux unités de calcul (3, 4) étant aptes à mettre en oeuvre une pluralité de mêmes partitions (P1A à PNA, P1B à PNB), chacune desdites unités de calcul (3, 4) comportant au moins un ordonnanceur (7A, 7B), une horloge interne (9A, 9B) et une plateforme logicielle (11A, 11B) comprenant ladite pluralité de partitions (P1A à PNA, P1B à PNB), le procédé comprenant au moins la suite d'étapes suivantes, ladite suite d'étapes étant mise en oeuvre de façon répétitive :
- une étape de génération (E1), mise en oeuvre par une unité de génération (12), consistant à générer une impulsion de synchronisation calibrée, ladite impulsion de synchronisation étant générée à partir de données d'une horloge (13) indépendante associée à l'unité de génération (12), l'unité de génération (12) comprenant un générateur d'impulsion (19) et un générateur de forme (15);
- une étape de transmission (E2), mise en oeuvre par des liaisons de transmission (22A, 22B) consistant à transmettre l'impulsion de synchronisation à chacune desdites unités de calcul (3, 4) ;
- des étapes de contrôle (E3A, E3B), à savoir une étape de contrôle (E3A, E3B) pour chacune desdites unités de calcul (3, 4), chacune desdites étapes de contrôle (E3A, E3B) qui est mise par une unité de contrôle (23A, 23B), consistant à comparer l'impulsion de synchronisation reçue par l'unité de calcul (3, 4) à une impulsion générée par l'horloge interne (9A, 9B) de cette unité de calcul (3, 4), et à en conclure à une conformité si l'impulsion de synchronisation et l'impulsion générée par l'horloge interne (9A, 9B) sont de même forme temporelle et à une absence de conformité si l'impulsion de synchronisation et l'impulsion générée par l'horloge interne (9A, 9B) sont de formes temporelles différentes en fonction de cette comparaison ; et
- des étapes de déclenchement (E4A, E43B), à savoir une étape de déclenchement (E4A, E4B) pour chacune desdites unités de calcul (3, 4), chacune desdites étapes de déclenchement (E4A, E4B) qui est mise par l'ordonnanceur (7A, 7B) de l'unité de calcul (3, 4) correspondante, consistant à déclencher une séquence de mise en oeuvre d'au moins certaines desdites partitions (P1A à PNA, P1B à PNB) à la réception de l'impulsion de synchronisation, et ceci uniquement lorsque l'étape de contrôle (E3A, E3B) correspondante conclut à une conformité.

7. Procédé selon la revendication 6,
**caractérisé en ce qu'**il comprend une étape d'arrêt (E5A, E35B) consistant à arrêter la prise en compte des traitements d'une desdites unités de calcul (3, 4) lorsque l'étape de contrôle (E3A, E3B) relative à cette unité de calcul (3, 4) conclut à une absence de conformité.

8. Procédé selon l'une des revendications 6 et 7,
**caractérisé en ce que** l'étape de génération (E1) génère la première impulsion de synchronisation après réception d'une information de disponibilité de chacune desdites unités de calcul (3, 4).

9. Procédé selon l'une quelconque des revendications 6 à 8,
**caractérisé en ce qu'**il comprend une étape de génération de retard (E6A, E6B), mise en oeuvre par un générateur de retard (26), consistant à ajouter des délais à l'impulsion de synchronisation, les délais étant différents en fonction des unités de calcul (3, 4) destinataires de l'impulsion de synchronisation, l'étape de contrôle (E3A, E3B) et l'étape de déclenchement (E4A, E4B) prenant en compte à chaque fois l'impulsion de synchronisation avec un délai correspondant, telle que reçue par l'unité de calcul (3, 4) correspondante.

10. Procédé selon l'une quelconque des revendications 6 à 9,
**caractérisé en ce qu'**il comprend au moins une étape de synchronisation directe consistant à réaliser une synchronisation entre les unités de calcul (3, 4) afin de synchroniser une ou plusieurs partitions à l'intérieur de la séquence de partitions.

11. Aéronef, comportant un ensemble (2) comportant un système de synchronisation d'au moins deux unités de calcul d'un aéronef, ainsi que lesdites au moins deux unités de calcul (3, 4) selon l'une quelconque des revendications 1 à 5.

## Patentansprüche

1. Anordnung, die ein System zur Synchronisierung von mindestens zwei Rechnereinheiten eines Luftfahrzeugs sowie die mindestens zwei Rechnereinheiten umfasst, wobei diese zwei Rechnereinheiten (3, 4) dazu fähig sind, eine Vielzahl von gleichen Partitionen (P1A bis PNA, P1B bis PNB) zu implementieren, wobei jede der Rechnereinheiten (3, 4) mindestens einen Scheduler (7A, 7B), eine interne Uhr (9A, 9B) und eine Softwareplattform (11A, 11B), die die Vielzahl von Partitionen (P1A bis PNA, P1B bis PNB) beinhaltet, umfasst,
wobei das Synchronisierungssystem Folgendes umfasst:
- eine unabhängige Uhr (13);
- eine Generierungseinheit (12), die dazu konfiguriert ist, einen Synchronisierungsimpuls zu generieren, wobei die Generierungseinheit (12) mit der unabhängigen Uhr (13) assoziiert ist und Folgendes beinhaltet: einen Impulsgenerator (19) und einen Formgenerator (15), um anhand von Daten der Uhr (13) einen kalibrierten Synchronisierungsimpuls zu generieren, wobei der Synchronisierungsimpuls periodisch generiert wird, und ein Empfangselement (16), das dazu konfiguriert ist, eine Verfügbarkeitsinformation von jeder der Rechnereinheiten (3, 4) zu empfangen;
- Übertragungsverbindungen (22A, 22B), die dazu konfiguriert sind, den Synchronisierungsimpuls an jede der Rechnereinheiten (3, 4) zu übertragen; und
- in jeder der Rechnereinheiten (3, 4), ein Überwachungselement (23A, 23B), das dazu konfiguriert ist, den durch die Rechnereinheit (3, 4) empfangenen Synchronisierungsimpuls mit einem Impuls, der durch die interne Uhr (9A, 9B) dieser Rechnereinheit (3, 4) generiert wird, zu vergleichen und auf Grundlage dieses Vergleichs eine Übereinstimmung festzustellen, wenn der Synchronisierungsimpuls und der durch die interne Uhr (9A, 9B) generierte Impuls die gleiche zeitliche Form aufweisen, und eine fehlende Übereinstimmung festzustellen, wenn der Synchronisierungsimpuls und der durch die interne Uhr (9A, 9B) generierte Impuls unterschiedliche zeitliche Formen aufweisen,
und dass der Scheduler (7A, 7B) jeder der Rechnereinheiten (3, 4) dazu konfiguriert ist, bei Empfang des Synchronisierungsimpulses eine Implementierungssequenz mindestens gewisser der Partitionen (P1A bis PNA, P1B bis PNB) auszulösen, dies jedoch nur, wenn das Überwachungselement (23A, 23B) der entsprechenden Rechnereinheit (3, 4) eine Übereinstimmung feststellt.

2. Anordnung nach Anspruch 1,
**dadurch gekennzeichnet, dass** sie dazu konfiguriert ist, das Berücksichtigen der Verarbeitungen einer der Rechnereinheiten (3, 4) zu stoppen, wenn das Überwachungselement (23A, 23B) dieser Rechnereinheit (3, 4) eine fehlende Übereinstimmung feststellt.

3. Anordnung nach einem der Ansprüche 1 und 2,
**dadurch gekennzeichnet, dass** die Generierungseinheit (12) dazu konfiguriert ist, den ersten Synchronisierungsimpuls nach Empfang einer Verfügbarkeitsinformation von jeder der Rechnereinheiten (3, 4) zu generieren.

4. Anordnung nach einem beliebigen der Ansprüche 1 bis 3,
**dadurch gekennzeichnet, dass** sie einen Verzögerungsgenerator (26) umfasst, der zwischen der Generierungseinheit (12) und den Rechnereinheiten (3, 4) eingerichtet ist und dazu konfiguriert ist, dem Synchronisierungsimpuls Verzögerungen hinzuzufügen, wobei die Verzögerungen in Abhängigkeit von den Rechnereinheiten (3, 4), die den Synchronisierungsimpuls empfangen, unterschiedlich sind, wobei jede der Rechnereinheiten (3, 4) den Synchronisierungsimpuls mit der entsprechenden Verzögerung, so wie er von dem Verzögerungsgenerator (26) empfangen wird, berücksichtigt.

5. Anordnung nach einem beliebigen der Ansprüche 1 bis 4,
**dadurch gekennzeichnet, dass** sie Elemente zur direkten Synchronisierung umfasst, die dazu konfiguriert sind, eine Synchronisierung zwischen den Rechnereinheiten (3, 4) durchzuführen, um eine oder mehrere Partitionen innerhalb der Partitionensequenz zu synchronisieren.

6. Verfahren zur Synchronisierung von mindestens zwei Rechnereinheiten eines Luftfahrzeugs, wobei diese zwei Rechnereinheiten (3, 4) dazu fähig sind, eine Vielzahl von gleichen Partitionen (P1A bis PNA, P1B bis PNB) zu implementieren, wobei jede der Rechnereinheiten (3, 4) mindestens einen Scheduler (7A, 7B), eine interne Uhr (9A, 9B) und eine Softwareplattform (11A, 11B), die die Vielzahl von Partitionen (P1A bis PNA, P1B bis PNB) beinhaltet, umfasst,
wobei das Verfahren mindestens die Abfolge folgender Schritte beinhaltet, wobei die Abfolge von Schritten wiederholt implementiert wird:
- einen Generierungsschritt (E1), der durch eine Generierungseinheit (12) implementiert wird und darin besteht, einen kalibrierten Synchronisierungsimpuls zu generieren, wobei der Synchronisierungsimpuls anhand von Daten einer unabhängigen Uhr (13), die mit der Generierungseinheit (12) assoziiert ist, generiert wird, wobei die Generierungseinheit (12) einen Impulsgenerator (19) und einen Formgenerator (15) beinhaltet;
- einen Übertragungsschritt (E2), der durch Übertragungsverbindungen (22A, 22B) implementiert wird und darin besteht, den Synchronisierungsimpuls an jede der Rechnereinheiten (3, 4) zu übertragen;
- Überwachungsschritte (E3A, E3B), genauer gesagt einen Überwachungsschritt (E3A, E3B) für jede der Rechnereinheiten (3, 4), wobei jeder der Überwachungsschritte (E3A, E3B), der durch eine Überwachungseinheit (23A, 23B) gesetzt wird, darin besteht, den durch die Rechnereinheit (3, 4) empfangenen Synchronisierungsimpuls mit einem Impuls, der durch die interne Uhr (9A, 9B) dieser Rechnereinheit (3, 4) generiert wird, zu vergleichen und auf Grundlage dieses Vergleichs eine Übereinstimmung festzustellen, wenn der Synchronisierungsimpuls und der durch die interne Uhr (9A, 9B) generierte Impuls die gleiche zeitliche Form aufweisen, und eine fehlende Übereinstimmung festzustellen, wenn der Synchronisierungsimpuls und der durch die interne Uhr (9A, 9B) generierte Impuls unterschiedliche zeitliche Formen aufweisen; und
- Auslöseschritte (E4A, E43B), genauer gesagt einen Auslöseschritt (E4A, E4B) für jede der Rechnereinheiten (3, 4), wobei jeder der Auslöseschritte (E4A, E4B), der durch den Scheduler (7A, 7B) der entsprechenden Rechnereinheit (3, 4) gesetzt wird, darin besteht, bei Empfang des Synchronisierungsimpulses eine Implementierungssequenz mindestens gewisser der Partitionen (P1A bis PNA, P1B bis PNB) auszulösen, dies jedoch nur, wenn der entsprechende Überwachungsschritt (E3A, E3B) eine Übereinstimmung feststellt.

7. Verfahren nach Anspruch 6,
**dadurch gekennzeichnet, dass** es einen Stoppschritt (E5A, E35B) beinhaltet, der darin besteht, das Berücksichtigen der Verarbeitungen einer der Rechnereinheiten (3, 4) zu stoppen, wenn der Überwachungsschritt (E3A, E3B) in Bezug auf diese Rechnereinheit (3, 4) eine fehlende Übereinstimmung feststellt.

8. Verfahren nach einem der Ansprüche 6 und 7,
**dadurch gekennzeichnet, dass** der Generierungsschritt (E1) den ersten Synchronisierungsimpuls nach Empfang einer Verfügbarkeitsinformation von jeder der Rechnereinheiten (3, 4) generiert.

9. Verfahren nach einem beliebigen der Ansprüche 6 bis 8,
**dadurch gekennzeichnet, dass** es einen Verzögerungsgenerierungsschritt (E6A, E6B) beinhaltet, der durch einen Verzögerungsgenerator (26) implementiert wird und darin besteht, dem Synchronisierungsimpuls Verzögerungen hinzuzufügen, wobei die Verzögerungen in Abhängigkeit von den Rechnereinheiten (3, 4), die den Synchronisierungsimpuls empfangen, unterschiedlich sind, wobei der Überwachungsschritt (E3A, E3B) und der Auslöseschritt (E4A, E4B) den Synchronisierungsimpuls jedes Mal mit einer entsprechenden Verzögerung berücksichtigen, so wie er durch die entsprechende Rechnereinheit (3, 4) empfangen wird.

10. Verfahren nach einem beliebigen der Ansprüche 6 bis 9,
**dadurch gekennzeichnet, dass** es mindestens einen direkten Synchronisierungsschritt beinhaltet, der darin besteht, eine Synchronisierung zwischen den Rechnereinheiten (3, 4) durchzuführen, um eine oder mehrere Partitionen innerhalb der Partitionensequenz zu synchronisieren.

11. Luftfahrzeug, das eine Anordnung (2), die ein System zur Synchronisierung von mindestens zwei Rechnereinheiten eines Luftfahrzeugs sowie die mindestens zwei Rechnereinheiten (3, 4) umfasst, nach einem beliebigen der Ansprüche 1 bis 5 umfasst.

## Claims

1. Assembly comprising a system for synchronizing at least two computing units of an aircraft, and also said at least two computing units, these two computing units (3, 4) being capable of implementing a plurality of identical partitions (P1A to PNA, P1B to PNB), each of said computing units (3, 4) comprising at least a scheduler (7A, 7B), an internal clock (9A, 9B) and a software platform (11A, 11B) comprising said plurality of partitions (P1A to PNA, P1B to PNB),
the synchronizing system comprising:
- an independent clock (13);
- a generation unit (12) configured to generate a synchronizing pulse, said generation unit (12) being associated with the independent clock (13) and comprising a pulse generator (19) and a form generator (15) for generating a calibrated synchronizing pulse on the basis of data from said clock (13), said synchronizing pulse being generated periodically, and a reception element (16) configured to receive an item of availability information from each of said computing units (3, 4);
- transmission links (22A, 22B) configured to transmit the synchronizing pulse to each of said computing units (3, 4); and
- in each of said computing units (3, 4), a control element (23A, 23B) configured to compare the synchronizing pulse received by the computing unit (3, 4) with a pulse generated by the internal clock (9A, 9B) of this computing unit (3, 4), and to conclude therefrom that there is conformity if the synchronizing pulse and the pulse generated by the internal clock (9A, 9B) have the same temporal form and that there is a lack of conformity if the synchronizing pulse and the pulse generated by the internal clock (9A, 9B) have different temporal forms on the basis of this comparison,
and in that the scheduler (7A, 7B) of each of said computing units (3, 4) is configured to trigger a sequence of implementing at least some of said partitions (P1A to PNA, P1B to PNB) upon receiving the synchronizing pulse, and to do so only when the control element (23A, 23B) of the corresponding computing unit (3, 4) concludes that there is conformity.

2. Assembly according to Claim 1,
**characterized in that** it is configured to stop taking into account the processing operations of one of said computing units (3, 4) when the control element (23A, 23B) of this computing unit (3, 4) concludes that there is a lack of conformity.

3. Assembly according to one of Claims 1 and 2,
**characterized in that** the generation unit (12) is configured to generate the first synchronizing pulse after receiving an item of availability information from each of said computing units (3, 4).

4. Assembly according to any one of Claims 1 to 3, **characterized in that** it comprises a delay generator (26) arranged between the generation unit (12) and said computing units (3, 4) and configured to add delays to the synchronizing pulse, the delays being different depending on the computing units (3, 4) intended to receive the synchronizing pulse, each of said computing units (3, 4) taking into account the synchronizing pulse with the corresponding delay as received from the delay generator (26).

5. Assembly according to any one of Claims 1 to 4, **characterized in that** it comprises direct synchronizing elements configured to synchronize the computing units (3, 4) in order to synchronize one or more partitions within the partition sequence.

6. Method for synchronizing at least two computing units of an aircraft, these two computing units (3, 4) being capable of implementing a plurality of identical partitions (P1A to PNA, P1B to PNB), each of said computing units comprising at least a scheduler (7A, 7B), an internal clock (9A, 9B) and a software platform (11A, 11B) comprising said plurality of partitions (P1A to PNA, P1B to PNB),
the method comprising at least the sequence of following steps, said sequence of steps being implemented repeatedly:
- a generation step (E1), implemented by a generation unit (12), of generating a calibrated synchronizing pulse, said synchronizing pulse being generated on the basis of data from an independent clock (13) associated with the generation unit (12), the generation unit (12) comprising a pulse generator (19) and a form generator (15) ;
- a transmission step (E2), implemented by transmission links (22A, 22B) of transmitting the synchronizing pulse to each of said computing units (3, 4);
- control steps (E3A, E3B), specifically a control step (E3A, E3B) for each of said computing units (3, 4), each of said control steps (E3A, E3B), which is set by a control unit (23A, 23B), consisting in comparing the synchronizing pulse received by the computing unit (3, 4) with a pulse generated by the internal clock (9A, 9B) of this computing unit (3, 4), and in concluding therefrom that there is conformity if the synchronizing pulse and the pulse generated by the internal clock (9A, 9B) have the same temporal form and that there is a lack of conformity if the synchronizing pulse and the pulse generated by the internal clock (9A, 9B) have different temporal forms on the basis of this comparison; and
- triggering steps (E4A, E43B), specifically a triggering step (E4A, E4B) for each of said computing units (3, 4), each of said triggering steps (E4A, E4B), which is set by the scheduler (7A, 7B) of the corresponding computing unit (3, 4), consisting in triggering a sequence of implementing at least some of said partitions (P1A to PNA, P1B to PNB) upon receiving the synchronizing pulse, and to do so only when the corresponding control step (E3A, E3B) concludes that there is conformity.

7. Method according to Claim 6,
**characterized in that** it comprises a stop step (E5A, E35B) of stopping taking into account the processing operations of one of said computing units (3, 4) when the control step (E3A, E3B) in relation to this computing unit (3, 4) concludes that there is a lack of conformity.

8. Method according to one of Claims 6 and 7,
**characterized in that** the generation step (E1) generates the first synchronizing pulse after receiving an item of availability information from each of said computing units (3, 4).

9. Method according to any one of Claims 6 to 8,
**characterized in that** it comprises a delay generation step (E6A, E6B), implemented by a delay generator (26), of adding delays to the synchronizing pulse, the delays being different depending on the computing units (3, 4) intended to receive the synchronizing pulse, the control step (E3A, E3B) and the triggering step (E4A, E4B) taking into account each time the synchronizing pulse with a corresponding delay as received by the corresponding computing unit (3, 4).

10. Method according to any one of Claims 6 to 9,
**characterized in that** it comprises at least one direct synchronizing step of synchronizing the computing units (3, 4) in order to synchronize one or more partitions within the partition sequence.

11. Aircraft,
comprising an assembly (2) comprising a system for synchronizing at least two computing units of an aircraft, as well as said two computing units (3, 4) according to any one of Claims 1 to 5.
